# EUROPEAN PATENT SPECIFICATION

(11) **EP 1 693 756 B1**
(45) Date of publication and mention of the grant of the patent: **05.09.2007**
(21) Application number: 05254648.8
(22) Date of filing: 26.07.2005
(51) Int. Cl.: G06F 11/14, G06F 11/20

(54) **Storage subsystem and storage system**
Speicherungssubsystem und Speicherungssystem
Sous-système et système de stockage

(30) Priority: 22.02.2005 JP 2005045949
(43) Date of publication of application: 23.08.2006
(60) Divisional application: 07003301.4
(73) Proprietor: Hitachi, Ltd., Tokyo 100-8280 (JP)
(72) Inventor: Arai, Koji Marunouchi Center Bldg. 12F, Tokyo 100-8220 (JP); Nagata, Koji Marunouchi Center Bldg. 12F, Tokyo 100-8220 (JP)
(74) Representative: Holt, Daniel Richard

(56) References cited:
- EP-A- 1 424 632
- US-A1- 2003 131 278
- US-B1- 6 253 295

## Description

This application relates to and claims priority from Japanese Patent Application No. 2004-083120, filed on March 22, 2004 (published as US 2005/210204) and Japanese Patent Application No. 2005-45949, filed on February 22, 2005 (published as US 2005/210210).

The present invention relates to a data storage control technique, and more specifically to a data copy technique.

Storage systems that comprise a storage subsystem or a plurality of storage subsystems in which logical volumes can be loaded is known. Storage systems are used for, by way of example, the storage of multi-generation data in a plurality of storage subsystems whereby, should damage occur thereto, the restoration thereof can be implemented using the stored data (see, for example, Japanese Laid-Open Patent Application No. 2003-242011; also US 2003/131278).

EP 1,424,632A discloses a storage system snapshot creating method and apparatus. In the storage-based snapshot creation, a block-selection specifying unit provided on a NAS processing unit specifies a block, which becomes necessary for the generation of snapshot data, to a specified-block analyzing unit within a disk apparatus. Moreover, a disk controller generates the snapshot data on the block specified as the snapshot target, while making an inquiry to the specified-block analyzing unit.

US 6,253,295 discloses a data storage system including first, second, third and fourth virtual storage volumes, the first and second virtual storage volumes controlled to enable a mirroring and synchronization of data therebetween. The data storage system further includes a first processor that is responsive to a "copy pair" command or its equivalent to copy a directory from the first virtual storage volume to a directory of the third virtual storage volume. The first processor also dispatches a copy command, or its equivalent, to copy the directory of the second virtual storage volume to the directory of the fourth virtual storage volume. A second processor is responsive to the copy command to cause a copying of the directory of the second virtual storage volume to the directory of the fourth virtual storage volume.

Incidentally, the plurality of storage subsystems referred to above in relation to US2003/131278 includes a first and second communicably connected storage subsystems. A host device, which facilitates the transmission of write requests and write target data, is provided with connection to at least the first storage subsystem.

In this case the first storage subsystem, which comprises a cache memory, receives write requests and write target data from the host device, stores the received write target data in the cache memory and, in accordance with the received write requests, can write the write target data held in the cache memory in a first logical volume. Furthermore, the first storage subsystem can execute a processing known as remote copy. More specifically, by way of example, the first storage subsystem, by transferring the write target data stored in the cache memory to the second storage subsystem, can write the write target data into a second logical volume present in the second storage subsystem. Upon the processing of a write request from the host device the first storage subsystem can transmit a write completion notification to the host device at a prescribed timing.

Remote copy techniques include synchronous remote copy in which write completion notification is sent when write target data from the host device is written in not only the first logical volume but also the second logical volume, and non-synchronous remote copy in which the write completion notification is sent prior to the writing of the write target data, following which the write target data is written in the second logical volume.

In synchronous remote copy it is considered preferable for the time from the receipt of the write request to the sending of the write completion notification to be as far as possible shortened. However, unless the data processing capacity (by way of example, unless the CPU processing speed is high) of the first storage subsystem is high it is difficult for this time to be shortened.

Accordingly, the use of non-synchronous remote copy has been examined. In non-synchronous remote copy it considered preferable for the time from the sending of the write completion notification to the writing of the write target data in the second logical volume to be as far as possible shortened. However, to shorten this time the implementation of measures such as increasing the processing capacity of the first storage subsystem (by way of example, loading of a high-processing speed CPU in the first storage subsystem or increasing the number of loaded CPU) or increasing the speed of data transfer between the first storage subsystem and the second storage subsystem (by way of example, increasing the capacity of the communication line) are considered necessary.

In addition, in the examination of a method of non-synchronous remote copy in which data management is implemented prior to and following updating by the writing in a cache memory of, by way of example, updated data written in a first logical volume or pre-updated data written in a first logical volume, an increase in the data written in the cache memory has been found to occur to the extent that the data is updated. Although, in order to prevent this, a method for increasing the cache memory has been considered, this method is inherently more expensive. In addition, although a method in which either pre-updated data or updated data is written in a disk-type memory device comprising a first logical volume has been considered as a separate method thereto, by virtue of the fact that the writing of data in a disk-type memory device is slower than the writing of data in a cache memory, this is thought to be linked to a deterioration in the non-synchronous remote copy processing speed.

Accordingly, an object of the present invention is the provision of efficient non-synchronous remote copy.

Other objects of the invention will be clear from the description given below.

The storage subsystem based on a first aspect of the present invention is preferably a first storage subsystem of a storage system comprising the first storage subsystem comprising a first logical volume having associated with it at least one disk drive and a second storage subsystem comprising a second logical volume, wherein the first storage subsystem is communicably connected to a host device for sending write target data and to said second storage subsystem, and comprises:
means for writing write target data from said host device in at least one disk drive associated with said first logical volume;
a snapshot memory region for the memory of snapshot management information that expresses a snapshot of a data group within said first logical volume;
a pre-update logical volume having associated with it at least one disk drive for storing data that constitutes data prior to update by the write target data and constitutes data that has been written in said first logical volume; and
snapshot updating means for, beyond a given time reference and when write target data has been written in said first logical volume, updating said snapshot management information to information that expresses said snapshot at said given time reference; characterized in that the first storage subsystem further comprises:
   pre-updated data write means for, beyond said given time reference and when write target data is written in said first logical volume, writing said pre-updated data in at least one disk drive which is associated with the pre-update logical volume, the pre-update logical volume not storing data items in the first logical volume which have not been updated after said given time reference ;
   remote copy means for, at a point in time later than said given time reference, judging, on the basis of the snapshot management information updated at said later point in time, in which of either said pre-update logical volume or said first logical volume the data constituting said data group at said given time reference exists and, by acquiring and sending the data from the one in which the data exists to said second storage subsystem, constructing said data group at said given time reference in said second logical volume; and
   timing generating means for repeatedly generating said given time reference.

The logical volumes may be provided on physical memory resources. Examples of physical memory resources include a hard disk, magnetic disk, optical disk, magnetic tape and semiconductor memory.

Preferably the storage subsystem further comprises means for, when said given time reference has been generated again, deleting all pre-updated data stored in said pre-update logical volume.

Preferably pre-update logical volume is a third logical volume that can be configured as a pair with said first logical volume, said first storage subsystem comprises local copy means for, in a case where the pair state of said first logical volume and said third logical volume is a first state, writing the write target data in not only said first logical volume but also said third logical volume, and said timing generating means repeatedly generates said given time reference by making said pair state a second state.

Preferably the first storage subsystem comprises: a first type logical volume, provided in a physical memory device, for which no specific attributes are set; a plurality of second type logical volumes, provided in a physical memory device, for which specific attributes are set, and said first logical volume and said second logical volume constitute said first type logical volume, said third logical volume constitutes a virtual logical volume configured from at least one of the second type logical volumes, and said local copy means, by writing said write target data in a second type logical volume of said plurality of second type logical volumes that has a free space, writes said write target data in said virtual logical volume.

Preferably said first storage subsystem comprises a cache memory for the temporary memory of said write target data exchanged between said host device and said first logical volume, and said pre-update logical volume is provided in said cache memory.

Preferably said pre-update logical volume is provided in the first logical volume.

Preferably said first storage subsystem comprises a cache memory for the temporary memory of said write target data exchanged between said host device and said first logical volume, and all or part of said snapshot management information is stored in at least one of said cache memory and the first logical volume. It should be noted that the "snapshot management information" referred to here forms snapshot management information 251 of a later-described embodiment. In this case, all or part of the snapshot management information 251 can be formed as at least one of a later-described finite difference bit map 202, address table 203 and snapshot management table 204. In addition, the first memory device referred to here may be a memory device in which write target data from a host is written, or a separate memory device thereto (by way of example, memory device in which no write target data from a host is written but in which control information for controlling the storage subsystem is written).

In one embodiment, the means can be actualized using hardware or write data from a host a computer program, or these in combination.

By way of example, the first storage subsystem can comprise: a cache memory for the temporary memory of said write target data exchanged between a host device for sending write requests and write target data and said first logical volume; at least one computer; and a program memory region in which one or more computer programs are stored for, by being read by said at least one computer, actuating said at least one computer, said pre-update logical volume is provided on said cache memory, and said at least one computer which reads said one or more computer programs is arranged to:
(1) receive write requests and write target data from said host device;
(2) write said received write target data in said first logical volume in accordance with said received write requests;
(3) from said given time reference onward, in addition to the processing of said (2), every time said processing of (1) is implemented, repeat (4) to (7) below;
(4) write said pre-updated data in said cache memory;
(5) update said snapshot management information to information that expresses said snapshot at said given time reference in accordance with the updating of said first logical volume by the writing of said write target data in said first logical volume;
(6) at a point in time later than said given time reference, judge, on the basis of the snapshot management information updated at said later timing, in which of either said cache memory or said first logical volume the data constituting said data group at said given time reference exists and, by the acquisition and sending of the data from the one in which the data exists to said second storage subsystem, constructs said data group at said certain timing in said second logical volume; and
(7) repeatedly generate said given time reference.

Furthermore, when the certain timing occurs again, the at least one computer can delete all pre-updated data from the cache memory. The computer may constitute, by way of example, a processor such as a CPU, or it may constitute a circuit substrate in which a processor is loaded or a computer device (by way of example a personal computer, PDA (Personal Digital Assistant) or mobile telephone) comprising a plurality of hardware resources (by way of example, input devices such as CPU, memory, keys and output devices such as a display device).

In one embodiment, said timing generating means regularly or irregularly execute events for the generating of the given time reference.

A storage system based on a second aspect of the present invention preferably comprises a first storage subsystem comprising a first logical volume having associated with it at least one disk drive and a second storage subsystem comprising a second logical volume,
wherein said first storage subsystem is communicably connected to a host device for sending write target data and said second storage subsystem, and comprises:
means for writing write target data from said host device into at least one disk drive associated with said first logical volume;
a snapshot memory region for the memory of snapshot management information that expresses a snapshot of a data group within said first logical volume;
a pre-update logical volume having associated with it at least one disk drive for storing data that constitutes data prior to update by the write target data and constitutes data that has been written in said first logical volume; and
snapshot updating means for, beyond a given time reference when the write target data is written in said first logical volume, updating said snapshot management information to information that expresses said snapshot at said given time reference, characterized in that the first storage subsystem further comprises:
   pre-updated data write means for, beyond said given time reference when write target data is written in said first logical volume, writing said pre-updated data in at least one disk drive which is associated with said pre-update logical volume, the pre-update logical volume not storing data items in the first logical volume which have not been updated after said given time reference;
   remote copy means for, at a point in time later than said given time reference, judging, on the basis of the snapshot management information updated at said later point in time, in which of either said pre-update logical volume or said first logical volume the data constituting said data group at said given time reference exists and, acquiring and sending the data from the one in which data exists to said second storage subsystem; and
   timing generating means for repeatedly generating said given time reference, and in that
   said second storage subsystem comprises means for, by the writing of data received from said first storage subsystem into said second logical volume, constructing said data group at said given time reference in said second logical volume.

Preferably the second storage subsystem comprises: a separate snapshot memory region for the memory of separate snapshot management information that expresses a snapshot of a data group within said second logical volume; a separate pre-updated memory region for the memory of separate pre-updated data that constitutes data prior to update by the data from said first storage subsystem and constitutes data that has been written in said second logical volume; pre-updated data write means for, when data from said first storage subsystem is written in said second memory device, writing said separate pre-updated data in said separate pre-updated memory region; and separate snapshot updating means for, when the data from said first storage subsystem is written in said second logical volume, updating said snapshot management information.

A method based on the third aspect of the present invention is a storage control method implemented in a storage system that comprises a first storage subsystem comprising a first logical volume having associated with it at least one disk drive and a second storage subsystem comprising a second logical volume,
wherein, said first storage subsystem is communicably connected to a host device for sending write target data, and to said second storage subsystem, and said first storage subsystem comprises:
a snapshot memory region for the memory of snapshot management information that expresses a snapshot of a data group within said first logical volume; and
a pre-update logical volume having associated with it at least one disk device for storing data that constitutes data prior to update by the write target data and constitutes data that has been written in said first logical volume,
the storage control method comprises the steps of:
   beyond a given time reference, writing write target data sent from said host device into at least one disk drive associated with said first logical volume;
   beyond said given time reference and when the write target data is written in said first logical volume, updating the snapshot management information to information that expresses said snapshot at said given time reference, characterized in that the method comprises the further steps of:
      beyond said given time reference and when the write target data is written in said first logical volume, writing said pre-updated data of said write target data in at least one disk drive associated with said pre-update logical volume, the pre-update logical volume not storing data items in the first logical volume which have not been updated after said given time reference;
      at a point in time later than said given time reference, judging, on the basis of the snapshot management information updated at said later point in time, in which of either said pre-update logical volume or said first logical volume the data constituting said data group at said certain timing exists and, by the acquisition and sending of the data from the one in which the data exists to said second storage subsystem, constructing said data group at said certain timing in said second logical volume; and
      repeatedly generating said given time reference.

### BRIEF DESCRIPTION OF THE DRAWINGS

FIG. 1 illustrates a storage system pertaining to a first embodiment of.the present invention;
FIG. 2A illustrates one example of information stored in a memory 102. FIG. 2B illustrates an example configuration of a logical volume table 137;
FIG. 3 is an explanatory diagram of non-synchronous remote copy implemented by the storage system pertaining to this embodiment;
FIG. 4 is an explanatory diagram of an example the process flow pertaining to one main part of this embodiment;
FIG. 5 is an explanatory diagram of a snapshot management method of this embodiment; and
FIG. 6 illustrates the entire flow including when the split state is initiated and when remote copy is executed.

### DESCRIPTION OF THE PREFERRED EMBODIMENTS

A description of a embodiment of the present invention is given below with reference to the diagrams.

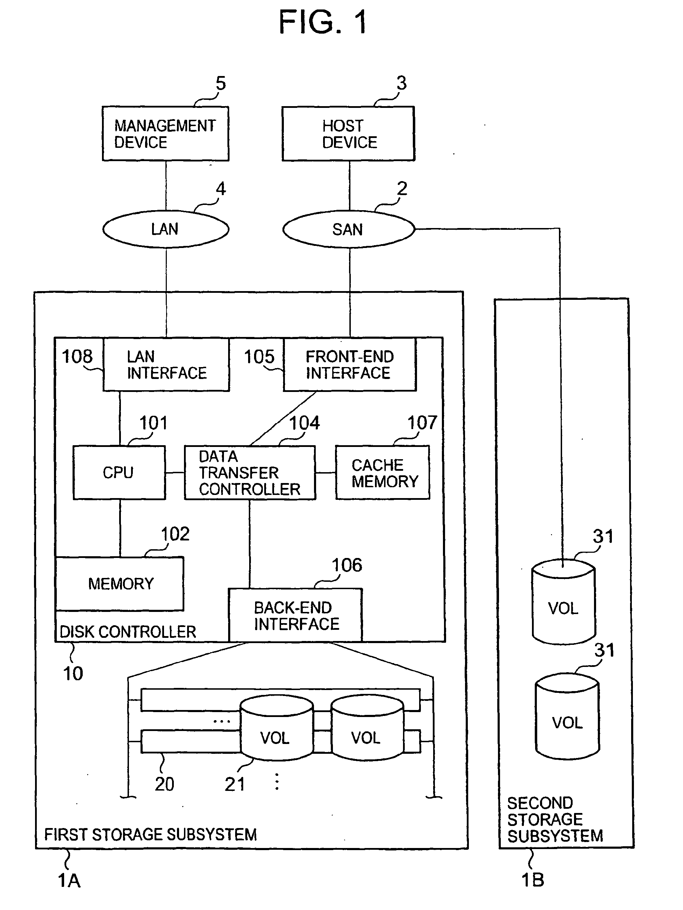

FIG. 1 illustrates the storage system pertaining to one embodiment of the present invention.

A first storage subsystem 1A comprises a disk controller 10 and plurality of (or one) disk type memory devices 20. In addition, the first storage subsystem 1A is connected to a host device 3, device manager 5 and second storage subsystem 1B. More specifically, the first storage subsystem 1A is connected to the host device 3 and the second storage subsystem 1B by way of a SAN (Storage Area Network) 2, and is connected to the device manager 5 by way of a LAN (Local Area Network) 4.

The host device 3 is a computer device (by way of example personal computer) comprising hardware resources such as a CPU, memory and display device. The host device 3 can send read target data read requests or write requests and write target data to the first storage subsystem 1A.

The device manager 5 is a computer device (by way of example personal computer) comprising hardware resources such as a CPU, memory and display device. By way of example, the device manager 5 can operate management programs not shown in the diagram and, based on the management programs, can recognize the operational state of the storage system 1 and control the operation of the first storage subsystem 1A. It should be noted that client programs such as web browsers can be operated by the device manager 5, and the operation of the first storage subsystem 1A can be controlled by management programs supplied from the first storage subsystem 1A by means of a CGI (common Gateway Interface).

The host device 3, device manager 5 and second storage subsystem 1B may be connected to the first storage subsystem 1A by way of a common network, and the connection of each of the host device 3, device manager 5 and second storage subsystem 1B may be by way of exclusive lines. At least one of the first storage subsystem 1A and the second storage subsystem 1B can be formed as a RAID (Redundant Array of Independent Disks).

The disk controller 10 controls the input/output of data to the disk-type memory devices 20 (by way of example, a hardware disk). The disk controller 10 comprises, by way of example, a CPU 101, memory 102, data transfer controller 104, front-end interface 105, back-end interface 106, cache memory 107 and LAN interface 108.

A variety of information can be stored in the memory 102. More specifically, by way of example, a variety of computer programs (not shown in the diagrams) read into the CPU 101 and logical volume tables for the management of later-described logical volumes can be stored in the memory 102.

Data transmitted between the front-end interface 105 and the back-end interface 106 (in other words, data exchanged between the host device 3 and the disk-type memory devices 20) is temporarily stored in the cache memory 107.

The front-end interface 105, which is an interface for the SAN 2, implements the transmission of data and control signals with the host device 3 by means of, by way of example, a fiber channel protocol.

The back-end interface 106, which serves as an interface for the disk-type memory devices 20, implements the transmission of data and control signals with the disk-type memory devices 20 by means of, by way of example, a fiber channel protocol.

The data transfer controller 104 controls the transfer of data between the CPU 101, front-end interface 105, back-end interface 106 and cache memory 107. By way of example, the data transfer controller 104 transfers data that read and written in the disk-type memory devices 20 by way of the SAN 4 between the interfaces 105, 106 by way of the cache memory 107.

The LAN interface 108, which serves as an interface for the LAN 4, is able to implement the transmission of data and control signals with the device manager 5 by way of, by way of example, a TCP/IP protocol.

A plurality of (or one) logical volumes 21 that serve as logic memory devices are set in the plurality of disk-type memory devices 20.

The CPU 101, by retrieving and executing the computer programs stored in the memory 102, can execute a variety of processings. By way of example, where read requests are received from the host device 3, the CPU 101 can temporarily read into the cache memory 107 read target data written in the logical volumes 21, following which it can read the read target data from the cache memory 107 and send it to the host device 3. In addition, by way of example, where write requests and write target data are received from the host device 3, the write target data is temporarily stored in the cache memory 107 and the CPU 101, in accordance with the write requests, can write the write target data stored in the cache memory 107 into the logical volumes 21. In addition, the CPU 101 can execute a later-described quick internal copy processing, snapshot update processing and remote copy processing and so on.

The second storage subsystem 1B may be of an identical or different hardware configuration to the first storage subsystem 1A. The second storage subsystem 1B can comprise one or a plurality of logical volumes 21.

The description above provides a summary of the storage system pertaining to this embodiment. The storage system is described in detail below.

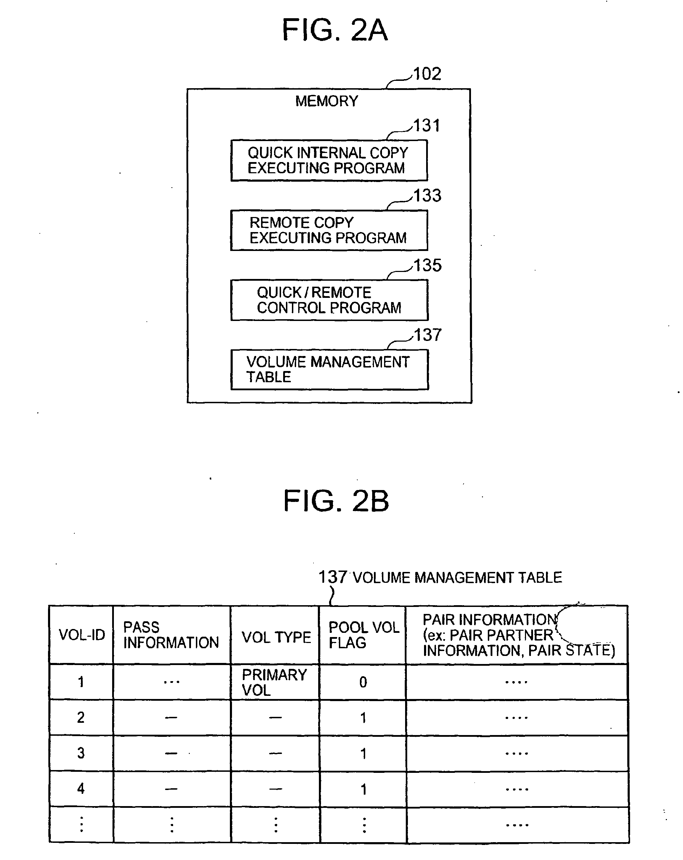

FIG. 2A illustrates one example of the information stored in the memory 102.

By way of example, a quick internal copy executing program 131 for executing the later-described quick internal copy processing and snapshot update processing, a remote copy executing program 133 for executing remote copy processing, quick/remote control program 135 for controlling the quick internal copy executing program 131 and the remote copy executing program, and a first volume management table 137 (need not be a table format) in which information related to the plurality of logical volumes 21 is listed, are stored in the memory 102.

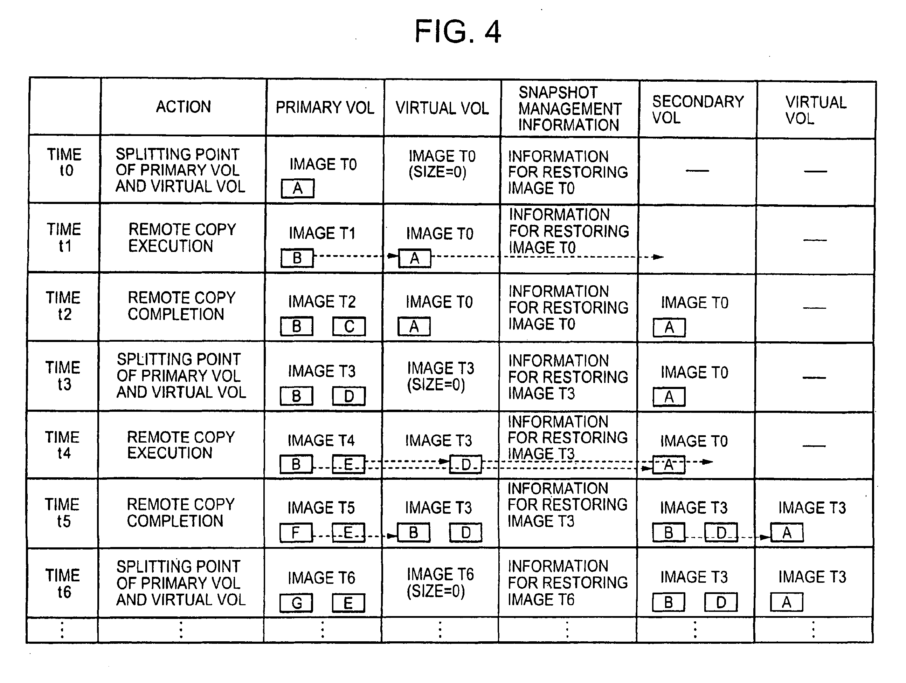

By the reading of the quick internal copy executing program 131, the remote copy executing program 133 and the quick/remote control program 135 into the CPU 101, the chain of the process flow, which is explained with reference to the later-described FIG. 4, can be actualized.

FIG. 2B illustrates an example configuration of the first volume management table 137.

For each of the plurality of logical volumes 21, a VOL-ID for identifying the logical volumes (hereafter abbreviated to "VOL"), pass information that expresses an access pass to the logical volumes, the type of logical volume (hereafter VOL type), a flag that expresses whether the logical volume is pool VOL (hereafter pool VOL flag), and at least one information element related to the VOL pair containing the logical volumes (hereafter pair information) are stored in the logical volume table 137. At least one information element of the information stored in the logical volume table 137 (by way of example, VOL-ID, VOL type, setting of pool VOL flag) can be input from an external device such as a device manager 5 or a host device 3.

Examples of VOL type include "primary" and "secondary" (not shown in the diagram), and "pool" (although not shown in the diagram the pool VOL flag is "1"). The VOL type referred to as "primary" (hereafter primary VOL) is the VOL that constitutes the copy origin for the prescribed copy processing (by way of example, remote copy processing). The VOL type referred to as "secondary" (hereafter secondary VOL), which is the VOL that constitutes the copy destination of the prescribed copy processing (by way of example, remote copy processing), has a memory capacity the same as the primary VOL. The pass information of both the primary VOL and secondary VOL is defined. In contrast thereto, the pass information of the VOL type referred to as "pool" (hereafter referred to as pool VOL) is undefined. A detailed description of pool VOL is given below.

Pool VOL flag constitutes information that expresses whether or not corresponding logical volumes 21 are pool VOL or not. More specifically, by way of example, it is apparent that when the pool VOL flag is "1" (in other words, when it is UP) the corresponding logical volume 21 is a pool VOL, and that when the pool VOL flag is "0" (in other words, when it is DOWN) the logical volume 21 correspondent thereto is not a pool.VOL.

Pair information includes, by way of example, pair partner information and the pair state. The pair partner information can include, by way of example, as information related to the logical volumes that form the pair partners (hereafter pair partner VOL), ID of the storage subsystem comprising the pair partner VOL, VOL-ID of the pair partner VOL, and pass information. The pair state includes, by way of example, a preparation state in which the pair partner VOL is in a reserved state (by way of example, state in which access to the pair partner VOL is prohibited), a copy state that expresses that the data within the pair source VOL is to be reproduced in the reserved pair partner VOL, and a split state that expresses that the pair partner VOL and pair origin VOL have been logically split and only the finite difference data prior to and following the updating of the pair origin VOL is to be copied to the pair partner VOL.

The CPU 101, by reference to the volume management table 137 as described above, can specify the type of VOL 21 that serves as the access target or the pair information. In addition, the CPU 101, where a pool VOL 21C has been allocated to a later-described virtual VOL, can define information that expresses pass to the pool VOL 21C, and can register this defined pass information in the volume management table 137. In addition, the CPU 101, by deleting the pass information of the unallocated pool VOL, can form the pool VOL as an unused state. The CPU 101 can, on the basis of whether or not pass information for a pool VOL has been registered, judge whether a pool VOL is being used or whether it is in the unused state.

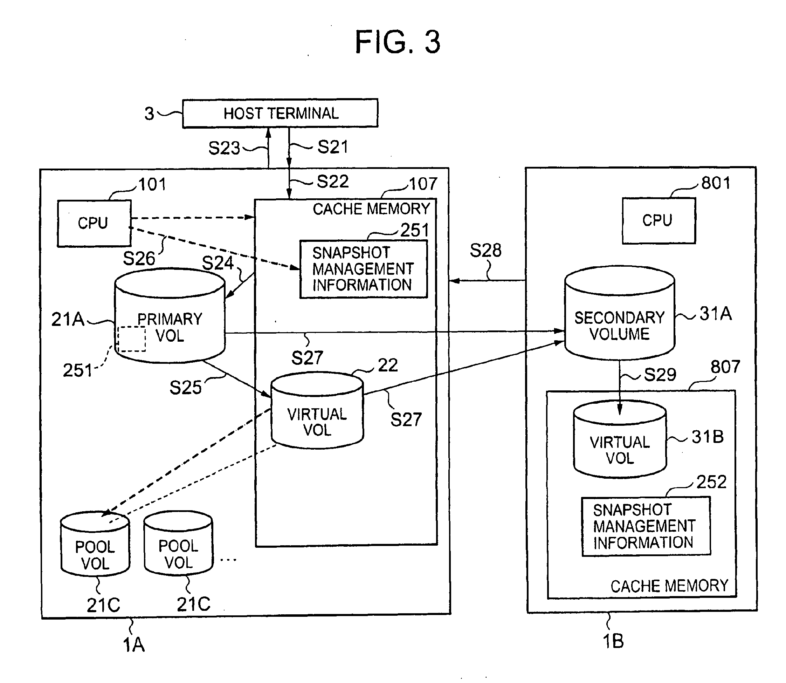

FIG. 3 is an explanatory diagram of non-synchronous remote copy implemented by the storage system pertaining to this embodiment.

First, prior to the description of the process flow, a description will be given of the configuration and the function thereof.

A primary VOL 21A, virtual VOL 22, pool VOL 21C and snapshot management information 251 exist in the first storage subsystem 1A.

The virtual VOL 22 can be formed as a pair with the primary VOL 21A (and/or the later described secondary VOL 31A). The virtual VOL 22, which constitutes a virtually prepared logical volume, is logically prepared on a prescribed physical memory resource such as, by way of example, the cache memory 107 (it may be prepared on the disk-type memory device 20). The CPU 101 can select one or more pool VOL 21C from among the plurality of pool VOL 21C (by way of example, unused pool VOL 21C not correspondent to any VOL) in the virtual VOL 22, and can allocate a selected one or more pool VOL 21C to the virtual VOL 22. The CPU 101, where data is written in the virtual VOL 22, may write this data into the allocated pool VOL 21C or, using the virtual VOL 22 only, may store this data without writing it into the pool VOL 21C. The CPU 101, by increasing and decreasing the number of pool VOL 21C allocated to the virtual VOL 22 as appropriate in response to the conditions of consumption of the memory resources provided by the one or more pool VOL 21C, can increase or decrease the usable memory capacity.

The snapshot management information 251 is stored in a prescribed memory resource such as, by way of example, the cache memory 107. The snapshot management information 251 expresses a snapshot of a data group (to put it another way, a primary VOL 21A image) within the primary VOL 21A at a certain timing (to put it another way, at a certain point). The CPU 101, by reference to the snapshot management information 251, can judge for each data constituting the abovementioned data group at the certain timing in which of either the virtual VOL 22 (or pool VOL 21C) and primary VOL 21A this data exists and, by acquiring the data from the judged side, can restore the abovementioned data group at the certain timing to the prescribed memory resource (by way of example, primary VOL 21A or a separate VOL 21).

It should be noted that all or part of the snapshot management information 251 may be substituted or added to the cache memory 107 and written in the disk-type memory device 20 (by way of example, primary VOL 21A or so-called system VOL in which information for controlling the first storage subsystem 1A is written). Although, as described later, the snapshot management information 251 comprises, by way of example, a finite difference bit map 202, storage table 203 and snapshot management table 204, at least one of these information elements 202, 203 and 204 may be substituted or added to the cache memory 107 and stored in the disk-type memory device 20. More specifically, by way of example, the first storage subsystem 1A (by way of example, CPU 101) can copy all or part of the snapshot management information 251 stored in the disk-type memory device 20 to the cache memory 107 and, conversely, can copy all or part of the snapshot management information 251 stored in the cache memory 107 to the disk-type memory device 20. In addition, by way of example, the first storage subsystem 1A (by way of example, CPU 101), where all or part of a further snapshot management information 251 (by way of example, all or part of the information 251 in the cache memory 107) has been updated, can further reflect all or part (by way of example, copy all or the finite difference) of the snapshot management information 251 following updating at a prescribed timing (by way of example, immediately following updating or regularly or irregularly) to all or part of another snapshot management information 251 (by way of example, all or part of the information 251 in the disk-type memory device 20). By the provision of two copies of all or part of the snapshot management information 251 in this way, even if the information of one is unable to be read from one (by way of example, where there is damage to the cache memory 107), the information can be read from the other.

The CPU 101 can read the data existing in at least one of the virtual VOL 22 (or pool VOL 21C) and primary VOL 21A and transfer (more specifically, by way of example, send the data or write requests in which this data is written) it to the second storage subsystem 1B.

The second storage subsystem 1B comprises a CPU 801, cache memory 807, secondary VOL 31A, snapshot management information 252 that expresses a snapshot of a data group of the secondary VOL 31A at a certain timing, and a virtual VOL 32 that can be paired with the secondary VOL 31A. The snapshot management information 252 and the virtual VOL 32 can be prepared on the cache memory 807.

The data from the first storage subsystem 1A is written in the secondary VOL 31A by the CPU 801. In addition, the data that expresses the finite difference prior to and following updating of the secondary VOL 31A can be written in the virtual VOL 32 by the CPU 801. In addition, at this time, the CPU 801 can update the snapshot management information 252 to information that expresses a snapshot that expresses a data group of the secondary VOL 31B at a certain timing. That is to say, the CPU 801 can execute an identical processing to the CPU 101.

The CPU 101 can form the pair state between the primary VOL 21A and the virtual VOL 22 as a copy state. This can be implemented in accordance with a command from an external device such as a device manager 5 or host device 3, or it can be actively implemented without receipt of this command. In the abovementioned copy state the CPU 101 can execute normal copy processing. More specifically, by way of example, when a copy state is formed between the primary VOL 21A and virtual VOL 22 and write target data is written in the primary VOL 21A, the CPU 101 can synchronously (or non-synchronously) therewith write the write target data in the virtual VOL 22 or the pool VOL 21C allocated thereto.

In addition, the CPU 101 can form the pair state of the primary VOL 21A and the virtual VOL 22 as a split state. Although this can be implemented in accordance with, by way of example, a command from an external device such as a device manager 5 or host device 3, in this embodiment the first storage subsystem 1A (by way of example CPU 101) can be actively implemented without receipt of this command. The CPU 101, where the primary VOL 21A is updated from the formation of the primary VOL 21A and virtual VOL 22 in the pair state and beyond, executes quick internal copy processing and snapshot updating processing using the quick internal copy executing program 131 which has been read therein.

Where the primary VOL 21A and virtual VOL 22 have been formed in a split state and write target data and write requests have been sent from the host device 3, the storage system pertaining to this embodiment can implement the following processing.

That is to say, the first storage subsystem 1A receives write requests and write target data from the host device 3 (Step S21), and the write target data is written in the cache memory 107 (S22). Where write target data is written in the cache memory 107 (or primary VOL 21A), the first storage subsystem 1A sends a write completion notification to the host device 3 (S23).

The CPU 101 reads the write target data written in the cache memory 107 and writes the write target data in the primary VOL 21A (S24). At this time, the CPU 101 executes a quick internal copy processing. By way of example, the CPU 101 copies (by way of example, shifts) the pre-updated data which is data that has not yet been updated by the write target data and is data that is written in the primary VOL 21A from the primary VOL 21A to the virtual VOL 22 (S25). In accordance with this processing, the plurality of data constituting a data group of the primary VOL 21A at the point of formation into the split state (to put it another way, the point at which the abovementioned normal copy processing is stopped) is dispersed into the primary VOL 21A and the virtual VOL 22. Although the CPU 101 can store the pre-updated data that has been copied into the virtual VOL 22 in the allocated pool VOL 21C, in this embodiment the pre-updated data is not shifted to the pool VOL 21C and is stored in the cache memory 107. This is because in remote copy processing pre-updated data can be more quickly acquired from the cache memory 107 than the disk-type memory device 20 in which the pool VOL 21C exists.

In addition, when quick internal copy processing is implemented the CPU 101 executes a snapshot update processing. More specifically, the CPU 101, in accordance with the updating of the primary VOL 21A that results from the writing of the write target data in the primary VOL 21A, updates the snapshot management information 251 to information that expresses a snapshot of a data group of the primary VOL 21A at the point of formation into the split state (to put it another way, the state in which the abovementioned normal copy has been stopped) (S26). To put it another way, the image of the primary VOL 21A at the point of splitting can be logically held in the virtual VOL 21A by the updating of the snapshot management information 251.

The CPU 101 repeatedly executes the processing of the Steps S22 to S26 to the extent that S21 is implemented in the abovementioned split state.

The CPU 101, in the abovementioned split state and at a prescribed or arbitrary timing following the point of formation into the split state (hereafter the point of splitting), executes remote copy processing by, using a read quick/remote control program 135, executing a remote copy executing program 133. More specifically, by the control of the quick/remote control program 135, the quick internal copy executing program 131 delivers the snapshot control information 151 to the remote copy executing program 133. The snapshot control information 151 expresses information for restoring a data group of the primary VOL 21A at the point of formation into the split state or, more specifically, by way of example, where the data that existed in the primary VOL 21A at the point of splitting is and where updating of the primary VOL 21A from the point of splitting and beyond has occurred. The remote copy executing program 133, in accordance with the delivered snapshot management information 151, judges in which of the virtual VOL 22 or primary VOL 21A the data from which the abovementioned data group were configured at the point of splitting exists, and acquires the data from the judged side and sends it to the secondary storage subsystem 1B (S27). Based on this, the abovementioned data group at the point of splitting is stored in the secondary VOL 31A and, as a result, the abovementioned data group at the abovementioned point of splitting is constructed in the secondary VOL 31A.

The second storage subsystem 1B can provide notification of write completion at a prescribed or arbitrary timing (by way of example, at the point in which the data is written in the cache memory 807 or the secondary VOL 31A) following the receipt of data from the first storage subsystem (S28).

Thereafter, where data has been received from the first storage subsystem 1A and the received data has been written in the secondary VOL 31A, the CPU 801 of the second storage subsystem 1B can write separate pre-updated data, which constitutes data that has not yet been updated by this data and is data that is written in the secondary VOL 31A, in the virtual VOL 32 (S29). In addition, at this time, the CPU 801 can update the snapshot management information 252 to information that expresses a snapshot of a data group within the secondary VOL 31A (by way of example, the image within the secondary VOL 31A at the abovementioned point of splitting).

FIG. 4 is an explanatory diagram of one example of the processing flow pertaining to one main part of the embodiment.

Both the primary VOL 21A and the secondary VOL 31A are configured from a plurality of block regions comprising a first block region and a second block region.

By way of example, a time t0 constitutes the point at which the primary VOL 21A and the virtual VOL 22 are formed in the split state (by way of example, the point at which a command for formation into the split state has been issued). The image of the primary VOL 21A at the point t0 is taken as "image T0". The image T0 is used to form an image in which a data block A is stored in a first block region of the primary VOL 21A. At the time t0 there is no pre-updated data stored in the virtual VOL 22. The snapshot management information 251 constitutes information for the restoring of the image T0.

When a data block B is overwritten on the first block region of the primary VOL 21A at a time t1 (in other words, during the split state period), the image of the primary VOL 21A changes from the image T0 to an image T1. In this case, the quick internal copy executing program 131 writes the pre-updated data block A from the primary VOL 21A into the virtual VOL 22. At this time, the quick internal copy executing program 131, in an updating of the first block region of the primary VOL 21A, updates the snapshot management information 251 to information that expresses that the pre-updated data block A that existed in the first block region is stored in the virtual VOL 22.

In addition, at the time t1, the local/remote control program 135 instructs the remote copy executing program 133 to execute remote copy processing, whereupon the updated snapshot management information 251 is delivered to the remote copy executing program 133 (or the remote copy executing program 133 is told of the location in which the information 251 exists). The remote copy executing program 133, by referring to the snapshot management information 251, specifies that the data block A from which the image T0 is configured exists in the virtual VOL 22, acquires the data block A from the virtual VOL 22, and sends the acquired data block A to the second storage subsystem 1B.

The time t2 represents the time at which the remote copy processing has been completed. As a result, the image T0 of the primary VOL 21A at the time t0 has been reproduced in the secondary VOL 31A.

In addition, when a data block C is written in the second block region of the primary VOL 21A at the time t2 (in other words, during the split state period), the image of the primary VOL 21A changes from the image T1 to the image T2. In this case, the quick internal copy executing program 131 updates the snapshot management information 251 to information that expresses that updating has occurred at the second block region of the primary VOL 21A.

By way of example, where a data block D is overwritten on a second block region of the primary VOL 21A following the time t2 and prior to time t3, the image of the primary VOL 21A changes from an image T2 to an image T3 (image in which a data block B exists in the first block region and the data block D exists in the second block region). In this case, the quick internal copy executing program 131 writes a pre-updated data block C from the primary VOL 21A to the virtual VOL 22. At this time, the quick internal copy executing program 131 updates the snapshot management information 251 to information that expresses that the pre-updated data block C existing in the second block region is stored in the virtual VOL 22 which constitutes the updating of the second block region of the primary VOL 21A.

Following this, and prior to the updating of the primary VOL 21A, the primary VOL 21A and virtual VOL 22 are again formed into a split state at the time t3. By way of example, the release of the split state and reformation of the split state may be implemented using a single command (in other words, the release and initiation of the split state may be formed essentially simultaneously) or, following the temporary release of the split state by a first command, the split state may be reformed again by a second command.

At the time t3 point or, to put it another way, where the abovementioned split state has been formed, the CPU 101 (by way of example quick internal copy executing program 131), in order to logically hold the image T3 of the primary VOL 21A in the virtual VOL 22 at the time t3, deletes all pre-updated data stored in the virtual VOL 22. As a result, the pre-updated data can be removed from the virtual VOL 22 and the free capacity of the cache memory 107 can be increased. It should be noted that, where it has been judged from the snapshot management information 251 that pre-updated data exists in the pool VOL 21C, the CPU 101 can delete the pre-updated data from the pool VOL 21C. The CPU 101 can form the pool VOL 21C from which the pre-updated data has been deleted in a non-usage state (allocatable state, in other words, a selectable state).

In addition, the CPU 101 updates the snapshot management information 251 to information for restoring the image T3 from information for restoring the image T0. More specifically, by way of example, by virtue of the fact that a state exists at the time t3 in which updating of the primary VOL 21A has still not been implemented, the CPU 101 updates the snapshot management information 251 to information that expresses that the updating at the primary VOL 21A has not been implemented.

Where a data block E is overwritten on the second block region of the primary VOL 21A at a time t4, the image of the primary VOL 21A changes from the image T3 to an image T4. In this case, the quick internal copy executing program 131 writes the pre-updated data block D from the primary VOL 21A into the virtual VOL 22. At this time, the quick internal copy executing program 131, in an updating of the second block region of the primary VOL 21A, updates the snapshot management information 251 to information that expresses that the pre-updated data block D that exists in the second block region is stored in the virtual VOL 22.

Remote copy processing is implemented at the time t4. The remote copy executing program 133 can, by referring to the update snapshot management information 251, specify that the data block B from which the image T3 is configured exists in the primary VOL 21A from the fact that the first block region of the primary VOL 21A has not been updated and, from the fact that the second block region of the primary VOL 21A has been updated, can specify that the separate data block D from which the image T3 is configured exists in the virtual VOL 22. The remote copy executing program 133 acquires the data block B from the primary VOL 21A, acquires the data block D from the virtual VOL 22, and sends the acquired data blocks B and D to the second storage subsystem 1B.

A time t5 represents the point at which the remote copy processing has been completed. As a result, the image T0 of the secondary VOL 31A has been updated to the image T3 of the primary VOL 21A at the time t3. More specifically, the data block B has overwritten the data block A of the first block region of the secondary VOL 31A, and the data block D has been written in the second block region. It should be noted that, beyond this, the image T3 can be held in the second storage subsystem 1B until the data from which the image T6 of the next split time t6 is configured has been received.

After this, the abovementioned processings implemented at time t3 to time t5 are repeated.

That is to say, in the first storage subsystem 1A, the primary VOL 21A and virtual VOL 22 are regularly or irregularly formed into a split state. In addition, the remote copy processing is implemented throughout the formation of the split state until the formation of the next split state (to put it another way, in parallel with the quick internal copy processing and the snapshot update processing). Beyond the point at which the remote copy processing has been completed the primary VOL 21A and virtual VOL 22 are formed again in a split state and, at this time, the snapshot management result is discarded (by way of example, pre-updated data is deleted from the virtual VOL 22). By the repetition of this processing in this way, images (in FIG. 4 the image T0 at the time t0, the image T3 at time t3 and the image T6 at time t6) in the primary VOL 21A at the initial point of formation of the irregularly or regularly formed split state (to put it another way, at the point of separation into the split state) can be logically held in the virtual VOL 22 and the image thereof can be copied to the secondary VOL 31A.

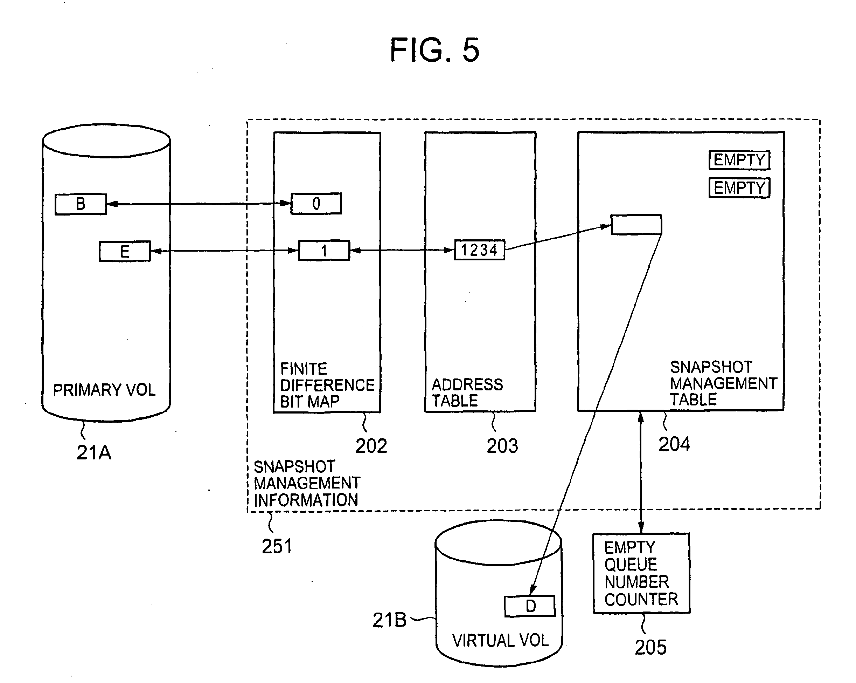

FIG. 5 is an explanatory diagram of the method of snapshot management of this embodiment.

FIG. 5 illustrates the change in the image of the primary VOL 21A of FIG 4 from the image T3 to the image T4 using, as an example, the event in which the image T3 is logically held by the virtual VOL 22.

The snapshot management information 251 contains, by way of example, a finite difference bit map 202, address table 203 and snapshot management table 204.

The finite difference bit map 202, which is provided in the cache memory 107, comprises a plurality of bits each corresponding to a plurality of block regions of the primary VOL 21A (by way of example, 1 block region of 64 k/bytes). By way of example, by virtue of the fact that, where the alteration from the image T3 to the image T4 occurs the first block region of the primary VOL 21A is, as shown in the diagram, not yet updated, the bit corresponding to the first block region remains as "0" and, by virtue of the fact that the data block D overwrites the data block D of the second block region, the bit corresponding to the block region changes from "0" to "1".

The address table 203 comprises address regions each corresponding to a plurality of block regions of the primary VOL 21A. Provided pre-updated data (to put it another way, finite difference data) corresponding to a certain block region exists, the addresses of the regions of the snapshot management table 204, which constitute addresses corresponding to the address regions, will be stored in address regions corresponding to certain block regions.

The snapshot management table 204 comprises, by way of example, management regions corresponding to each of the plurality of block regions of the virtual VOL 22 (or pool VOL 21C). Which generation of snapshot data the pre-updated data stored in positions corresponding to the block regions of the virtual VOL 22 exists in is stored in these management regions. The pre-updated data of a plurality of generations can be acquired by a search of these management regions in accordance therewith. It should be noted that regions of the management table 204 not in use can be formed as empty queues. The empty queues can be managed by an empty queue counter 205 provided in the cache memory 107.

The image of the primary VOL 21A at the point of snapshot production can be logically copied by means of the virtual VOL 22. Which generation of pre-updated data the data of the virtual VOL 22 exists in can be specified by the snapshot management table 204.

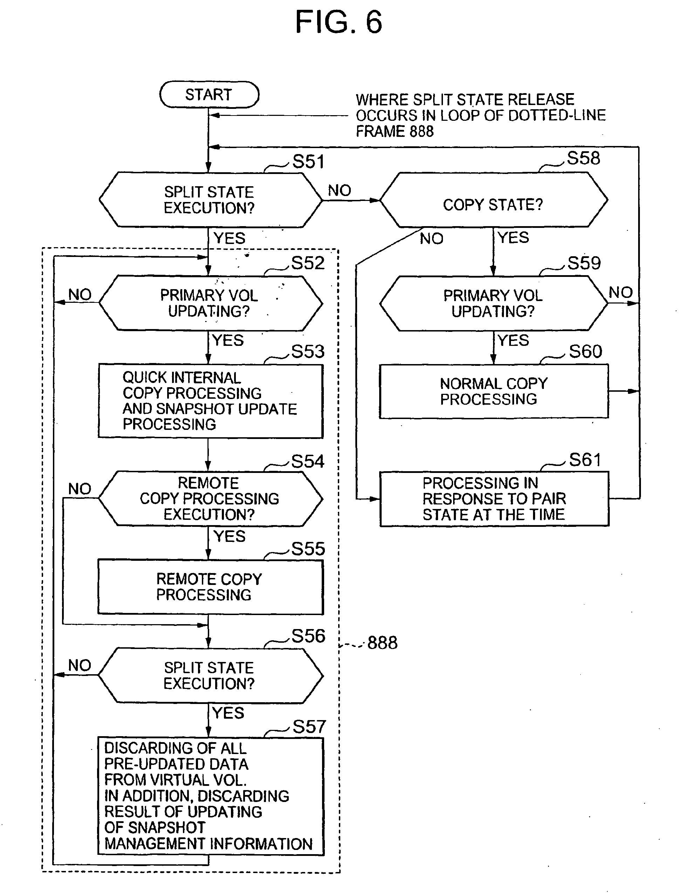

FIG. 6 illustrates one example of the entire process flow implemented by the storage system pertaining to this embodiment.

The primary VOL 21A and virtual VOL 22 can be formed in a split state internally by the execution by the CPU 101 of a command for the initiation of the split state, and this can be registered in the logical volume table 137. Where, as a result, the split state is initiated (YES in S51) and, thereafter, new data is written in the primary VOL 21A (YES in S52), providing the existing data is updated by this new data the internal copy processing and the snapshot update processing will be implemented (S 53).

The processing of YES in S52 and S53 is repeated at least until, during the split state period beyond the YES of S51, remote copy processing is executed (NO in S54).

Provided the remote copy processing is executed (by way of example, provided this is executed in a prescribed time or a remote copy executing command from an external device such as a host device 3 is received) during this period (YES in S54), remote copy processing will be executed in accordance with the snapshot management information 251 (S55).

Following the completion of the remote copy processing (by way of example, following the transfer of the data that constitutes the target for the remote copy processing to the second storage subsystem 1B and the receipt of a write completion notification from the subsystem 1B), provided a split state is again initiated (YES in S56), all pre-updated data stored in the virtual VOL 22 ((and/or) pool VOL 21C) will be discarded and, in addition, the updated result of the snapshot management information 251 will be discarded (S57). That is to say, both the virtual VOL 22 and the snapshot management information 251 serve as contents that express the image of the primary VOL 21A at the point at which the split state is again initiated.

Thereafter, the processing of S52 to S57 is repeated. That is to say, the loop shown by the dotted-line frame 888 is formed. By way of example, if a release from the split state occurs within this loop the processing will withdraw from the loop and S51 will be initiated. FIG.4 described above expresses one example of the processing contents of the loop of the dotted-line frame 888.

The split state is not initiated in S51 (NO in S51) and, by way of example, provided the pair state between the primary VOL 21A and virtual VOL 22 is a copy state (YES in S58), the above-described normal copy processing will be executed (S60) in accordance with the updating of the primary VOL 21A (YES in S59).

In addition, even if the pair state between the primary VOL 21A and virtual VOL 22 is neither a split state nor a copy state (NO in S58 and NO in S51), the processing will be executed in accordance with the pair state that exists at that time (S61).

Based on the embodiment as described above, beyond the formation of the primary VOL 21A and virtual VOL 22 in the split state, provided the existing data is updated by the new data to that extent that new data is written in the primary VOL 21A, the pre-updated data (in other words, the existing data) will be written in the virtual VOL 22 and, in addition, where in the primary VOL 21A the updating has occurred and where the pre-updated data exists and so on will be written in the snapshot management information 251. That is to say, beyond the formation of the virtual VOL 22 and the primary VOL 21A in the split state, the image of the primary VOL 21A at the point of initiation of the split state will be held in the first storage subsystem 1A no matter how much new data is written in the primary VOL 21A. Based on the snapshot management information 251 that expresses the image at the time of initiation of the split state (to put it another way, the snapshot), a judgment is made as to in which of either the primary VOL 21A or the virtual VOL 22 the data from which the image at the time of initiation of the split state exists, the data is read from the judged side and transferred to the second storage sub-system 1B and this transferred data is then stored in the secondary VOL 21B provided therein. The processing described above is repeated in accordance with the regular or irregular repetition of the split state initiation. By virtue of this, not all images of the primary VOL 21A but only the image at the time of the initiation of the split state is held in the first storage sub-system 1A, and the held image is reproduced in the second storage subsystem 1B. By virtue of the fact that, accordingly, the load inherent to snapshot production and non-synchronous remote copy can be suppressed, even if neither the capacity of the memory resource of the first storage system 1A (by way of example, cache memory) nor the processor performance is very good, the deterioration of the processing speed of the first storage subsystem 1A as a whole can be suppressed.

In addition, based on the embodiment described above, all pre-updated data stored in the virtual VOL 22 beyond the time of initiation of the N^{th} (by way of example N≥1) split state is deleted from the virtual VOL 22 at the time of initiation of the N+1^{th} split state. By virtue of this, savings of the consumed memory capacity in the cache memory 107 can be achieved.

In addition, based on the embodiment described above, a virtual VOL 32 that can be paired with the secondary VOL 31A is prepared at the remote side, and the pre-updated data of the secondary VOL 31A is stored in the virtual VOL 32. In addition, the images of the secondary VOL 31A are processed in accordance with the snapshot management information 252. By virtue of this, if link errors occur in data transfer in which, by way of example, the data sequence is not guaranteed and the data within the secondary VOL cannot be used, by virtue of the fact that the images of the secondary volume VOL 31A can be restored in accordance with the snapshot management information 252 and the virtual VOL 32, damage can be averted.

Although the description given above is of an ideal embodiment of the present invention, this represents one example only used to described the present invention and should not imply that the scope of the invention is restricted to this embodiment. The present invention can be executed in a range of other modes.

By way of example, the first sub-storage system 1A can hold both the time (by way of example, year-month-day-hour-minute-seconds) at each point of updating of the primary VOL 21A and the history corresponding to the various conditions at each time of updating (by way of example, pair state between the primary VOL 21A and virtual VOL 22, existence of error, contents of error and so on) in a prescribed memory region (by way of example, the memory 102 or cache memory 107), and the history can be provided to an external device (by way of example, management device 5 or host device 3) that is communicably connected to the first storage subsystem 1A. By virtue of this, the history can be viewed on a display screen provided in the external device.

In addition, by way of example, the pre-updated data may be shifted from the virtual VOL 22 to the pool VOL 21C and deleted from the virtual VOL 22 throughout the abovementioned split state period.

In addition, by way of example, the first storage subsystem 1A and the second storage subsystem 1B need not be restricted to the respective hardware configurations described above, and other configurations thereof may be adopted. More specifically, by way of example, a configuration comprising a plurality of adaptors serving a function the same as the front-end interface 105 or a plurality of adaptors serving a function the same as the back-end interface 106 in which, in each adaptor, a plurality of microprocessors for controlling the adaptors are mounted may be adopted.

In addition, by way of example, the CPU 101 may delete all non-updated data stored in the virtual VOL 22 (and/or pool VOL 22) not only when the split state is initiated but also when the remote copy (by way of example, at the time t5) is completed.

In addition, by way of example, although this may have been described above, the pair state can be autonomously changed by the CPU 101, or it can be implemented in accordance with an instruction from an external device (by way of example, host device 3 and device manager 5).

In addition, by way of example, in FIG. 4, the intervals between the times t0, t3, t6, ... at which the split state is initiated may be either fixed or not fixed. In addition, schedule information in which the schedule of the timings for the initiation of the split state and the timings for the execution of remote copy are expressed may be registered in a prescribed memory region (by way of example memory 102), whereupon the CPU 101 may control the establishment of when the split state is initiated and when the remote copy is executed in accordance with this schedule information. The timing information registered in the schedule information may comprise, by way of example, the time itself, or an elapsed time from the initiation of a previous split (by way of example, immediately previous) state.

In addition, by way of example, at least one of the first storage subsystem 1A and the second storage subsystem 1B may implement a control that pertains to the manner in which the logical volumes they hold are indicated to the external device (by way of example, a host device or device manager). By way of example, the first storage system 1A may implement a control in which, although the image of the primary VOL 21A is displayed in an external device (by way of example, the host device 3), the image of the virtual VOL 22 is not displayed.

In addition, by way of example, throughout the same split state period, the snapshot production timing (by way of example, the issue of the snapshot production command) and the remote copy processing period (period from initiation to completion) may be repeated.

## Claims

1. A storage subsystem of a storage system that comprises a first storage subsystem (1A) comprising a first logical volume (21A) having associated with it at least one disk drive (20) and a second storage subsystem (1B) comprising a second logical volume (31A),
wherein the first storage subsystem is communicably connected to a host device (3) for sending write target data and to said second storage subsystem, and comprises:
means for writing write target data from said host device in at least one disk drive associated with said first logical volume (21A);
a snapshot memory region for the memory of snapshot management information (251) that expresses a snapshot of a data group within said first logical volume (21A);
a pre-update logical volume (21B) having associated with it at least one disk drive for storing data that constitutes data prior to update by the write target data and constitutes data that has been written in said first logical volume (21A); and
snapshot updating means for, beyond a given time reference and when write target data has been written in said first logical volume (21A), updating said snapshot management information (251) to information that expresses said snapshot at said given time reference;
**characterized in that** the first storage subsystem (1A) further comprises:
pre-updated data write means (131) for, beyond said given time reference and when write target data is written in said first logical volume, writing said pre-updated data in at least one disk drive which is associated with the pre-update logical volume (21B), the pre-update logical volume not storing data items in the first logical volume (21A) which have not been updated after said given time reference ;
remote copy means (133) for, at a point in time later than said given time reference, judging, on the basis of the snapshot management information (251) updated at said later point in time, in which of either said pre-update logical volume (21B) or said first logical volume (21A) the data constituting said data group at said given time reference exists and, by acquiring and sending the data from the one in which the data exists to said second storage subsystem (1B), constructing said data group at said given time reference in said second logical volume (31A); and
timing generating means for repeatedly generating said given time reference.

2. The storage subsystem according to Claim 1 further comprising means for, when said given time reference has been generated again, deleting all pre-updated data stored in said pre-update logical volume (21B).

3. The storage subsystem according to Claim 1 wherein said pre-update logical volume (21B) is a third logical volume that can be configured as a pair with said first logical volume (21A),
said first storage subsystem (1A) comprises local copy means (131) for, in a case where the pair state of said first logical volume and said third logical volume is a first state, writing the write target data in not only said first logical volume but also said third logical volume, and
said timing generating means repeatedly generates said given time reference by making said pair state a second state.

4. The storage subsystem according to Claim 3 wherein said first storage subsystem (1A) comprises:
a first type logical volume, provided in a physical memory device, for which no specific attributes are set;
a plurality of second type logical volumes, provided in a physical memory device, for which specific attributes are set, and
said first logical volume (21A) and said second logical volume (31A) constitute said first type logical volume,
said third logical volume (21B) constitutes a virtual logical volume configured from at least one of the second type logical volumes,
and said local copy means, by writing said write target data in a second type logical volume of said plurality of second type logical volumes that has a free space, writes said write target data in said virtual logical volume (22).

5. The storage subsystem according to Claim 1 wherein said first storage subsystem (1A) comprises a cache memory (107) for the temporary memory of said write target data exchanged between said host device (3) and said first logical volume (21A), and
said pre-update logical volume (21B) is provided in said cache memory (107).

6. The storage subsystem according to Claim 1, wherein said pre-update logical volume (21B) is provided in the first logical volume (21A).

7. The storage subsystem according to Claim 1 wherein said first storage subsystem (1A) comprises a cache memory (107) for the temporary memory of said write target data exchanged between said host device and said first logical volume (21A), and
all or part of said snapshot management information (251) is stored in at least one of said cache memory (107) and the first logical volume (21A).

8. The storage subsystem according to Claim 1 wherein said first storage subsystem (1A) comprises:
a cache memory (107) for the temporary memory of said write target data exchanged between a host device (3) for sending write requests and write target data and said first logical volume (21A);
at least one computer (101);
and a program memory region (102) in which one or more computer programs are stored for, by being read by said at least one computer, actuating said at least one computer,
said pre-update logical volume (21B) is provided on said cache memory (107), and
said at least one computer which reads said one or more computer programs is arranged to:
(1) receive write requests and write target data from said host device (3);
(2) write said received write target data in said first logical volume (21A)in accordance with said received write requests;
(3) from said given time reference onward, in addition to the processing of said (2), every time said processing of (1) is implemented, repeat (4) to (7) below;
(4) write said pre-updated data in said cache memory (107);
(5) update said snapshot management information (251) to information that expresses said snapshot at said given time reference in accordance with the updating of said first logical volume (21A)by the writing of said write target data in said first logical volume;
(6) at a point in time later than said given time reference, judge, on the basis of the snapshot management information (251) updated at said later timing, in which of either said cache memory (107) or said first logical volume (21A) the data constituting said data group at said given time reference exists and, by the acquisition and sending of the data from the one in which the data exists to said second storage subsystem (1B), constructs said data group at said certain timing in said second logical volume (31A); and
(7) repeatedly generate said given time reference.

9. The storage subsystem according to Claim 8,
wherein said at least one computer (101) is arranged to delete all pre-updated data from said cache memory (107) when said given time reference occurs again.

10. The storage subsystem according to Claim 9,
wherein said timing generating means regularly or irregularly execute events for the generating of the given time reference.

11. A storage subsystem of a storage system comprising a first storage subsystem (1A) comprising a first logical volume (21A) having associated with it at least one disk drive (20) and a second storage subsystem (1B) comprising a second logical volume (21B),
wherein said first storage subsystem (1A) is communicably connected to a host device (3) for sending write target data and said second storage subsystem (1B), and comprises:
means for writing write target data from said host device (3) into at least one disk drive associated with said first logical volume (21A);
a snapshot memory region for the memory of snapshot management information (251) that expresses a snapshot of a data group within said first logical volume (21A);
a pre-update logical volume (21B) having associated with it at least one disk drive for storing data that constitutes data prior to update by the write target data and constitutes data that has been written in said first logical volume (21A); and
snapshot updating means for, beyond a given time reference when the write target data is written in said first logical volume (21A), updating said snapshot management information (251) to information that expresses said snapshot at said given time reference, **characterized in that** the first storage subsystem further comprises:
pre-updated data write means (131) for, beyond said given time reference when write target data is written in said first logical volume (21A), writing said pre-updated data in at least one disk drive which is associated with said pre-update logical volume (21B), the pre-update logical volume not storing data items in the first logical volume (21A) which have not been updated after said given time reference;
remote copy means (133) for, at a point in time later than said given time reference, judging, on the basis of the snapshot management information (251) updated at said later point in time, in which of either said pre-update logical volume (21B) or said first logical volume (21A) the data constituting said data group at said given time reference exists and, acquiring and sending the data from the one in which data exists to said second storage subsystem (1B); and
timing generating means for repeatedly generating said given time reference, and **in that**
said second storage subsystem (1B) comprises means for, by the writing of data received from said first storage subsystem (1A) into said second logical volume (31A), constructing said data group at said given time reference in said second logical volume.

12. The storage subsystem according to Claim 11 wherein said second storage subsystem (1B) comprises:
a separate snapshot memory region for the memory of separate snapshot management information (252) that expresses a snapshot of a data group within said second logical volume (31A);
a separate pre-updated memory region for the memory of separate pre-updated data that constitutes data prior to update by the data from said first storage subsystem and constitutes data that has been written in said second logical volume (31B);
pre-updated data write means for, when data from said first storage subsystem is written in said second memory device, writing said separate pre-updated data in said separate pre-updated memory region; and
separate snapshot updating means for, when the data from said first storage subsystem is written in said second logical volume, updating said snapshot management information.

13. A storage control method implemented in a storage system that comprises a first storage subsystem (1A) comprising a first logical volume (21A) having associated with it at least one disk drive (20)and a second storage subsystem (1B) comprising a second logical volume (31A),
wherein, said first storage subsystem (1A) is communicably connected to a host device (3) for sending write target data, and to said second storage subsystem (1B), and said first storage subsystem (1A) comprises:
a snapshot memory region for the memory of snapshot management information (251) that expresses a snapshot of a data group within said first logical volume (21A); and
a pre-update logical volume (21B) having associated with it at least one disk device for storing data that constitutes data prior to update by the write target data and constitutes data that has been written in said first logical volume (21A),
the storage control method comprises the steps of:
beyond a given time reference, writing write target data sent from said host device (3) into at least one disk drive associated with said first logical volume (21A);
beyond said given time reference and when the write target data is written in said first logical volume (21A), updating the snapshot management information to information that expresses said snapshot at said given time reference, **characterized in that** the method comprises the further steps of:
beyond said given time reference and when the write target data is written in said first logical volume (21A), writing said pre-updated data of said write target data in at least one disk drive associated with said pre-update logical volume (21B), the pre-update logical volume not storing data items in the first logical volume which have not been updated after said given time reference;
at a point in time later than said given time reference, judging, on the basis of the snapshot management information updated at said later point in time, in which of either said pre-update logical volume or said first logical volume the data constituting said data group at said certain timing exists and, by the acquisition and sending of the data from the one in which the data exists to said second storage subsystem, constructing said data group at said certain timing in said second logical volume; and
repeatedly generating said given time reference.

## Patentansprüche

1. Speicher-Teilsystem eines Speichersystems, das ein erstes Speicher-Teilsystem (1A) mit einem ersten logischen Volumen (21A), dem mindestens ein erstes Plattenlaufwerk (20) zugeordnet ist, und ein zweites Speicher-Teilsystem (1 B) mit einem zweiten logischen Volumen (31A) aufweist,
wobei das erste Speicher-Teilsystem mit einem Host-Gerät (3) zum Senden von Schreibzieldaten und mit dem zweiten Speicher-Teilsystem in Übertragungsverbindung steht und aufweist:
eine Einrichtung zum Einschreiben von Schreibzieldaten von dem Host-Gerät in mindestens ein dem ersten logischen Volumen (21A) zugeordnetes Plattenlaufwerk,
einen Snapshot-Speicherbereich zur Speicherung von Snapshot-Verwaltungsinformationen (251), die ein Snapshot einer Datengruppe innerhalb des ersten logischen Volumens (21A) ausdrücken,
ein logisches Voraktualisierungsvolumen (21 B), dem mindestens ein Plattenlaufwerk zur Speicherung von Daten zugeordnet ist, die Daten vor der Aktualisierung durch die Schreibzieldaten sowie Daten, die in das erste logische Volumen (21A) eingeschrieben worden sind, bilden, und
eine Snapshot-Aktualisiereinrichtung, die über eine gegebene Zeitreferenz hinaus und wenn Schreibzieldaten in das erste logische Volumen (21A) eingeschrieben worden sind, die Snapshot-Verwaltungsinformationen (251) zu Informationen aktualisiert, die das Snapshot zu der gegebenen Zeitreferenz ausdrücken,
**dadurch gekennzeichnet, dass** das erste Speicher-Teilsystem (1A) ferner aufweist:
eine Voraktualisierungsdaten-Schreibeinrichtung (131), die nach der gegebenen Zeitreferenz und wenn Schreibzieldaten in das erste logische Volumen eingeschrieben worden sind, die voraktualisierten Daten in mindestens ein dem logischen Voraktualisierungsvolumen (21 B) zugeordnetes Plattenlaufwerk einschreibt, wobei das logische Voraktualisierungsvolumen keine Datenteile in das erste logische Volumen (21A) einspeichert, die nach der gegebenen Zeitreferenz nicht aktualisiert worden sind,
eine Fernkopiereinrichtung (133), die zu einem nach der gegebenen Zeitreferenz gelegenen Zeitpunkt aufgrund der zu diesem späteren Zeitpunkt aktualisierten Snapshot-Verwaltungsinformationen (251) beurteilt, ob die die Datengruppe zu der gegebenen Zeitreferenz bildenden Daten in dem logischen Voraktualisierungsvolumen (21 B) oder dem ersten logischen Volumen (21A) vorliegen, und durch Erfassen und Senden der Daten von dem betreffenden Volumen, in dem die Daten vorliegen, an das zweite Speicher-Teilsystem (1B) die Datengruppe zu der gegebenen Zeitreferenz in dem zweiten logischen Volumen (31 A) aufbaut, und
eine Zeitpunkt-Generiereinrichtung zur wiederholten Erzeugung der gegebenen Zeitreferenz.

2. Speicher-Teilsystem nach Anspruch 1 mit ferner einer Einrichtung, die dann, wenn die gegebene Zeitreferenz erneut erzeugt worden ist, sämtliche in dem logischen Voraktualisierungsvolumen (21 B) gespeicherten voraktualisierten Daten löscht.

3. Speicher-Teilsystem nach Anspruch 1, wobei
das logische Voraktualisierungsvolumen (21 B) ein drittes logisches Volumen ist, das mit dem ersten logischen Volumen (21A) paarweise konfigurierbar ist,
das erste Speicher-Teilsystem (1A) eine lokale Kopiereinrichtung (131) aufweist, die in dem Fall, dass sich der Paarzustand des ersten mit dem dritten logischen Volumen in einem ersten Zustand befindet, die Schreibzieldaten nicht nur in das erste sondern auch in das dritte logische Volumen einschreibt, und
die Zeitpunkt-Generiereinrichtung die gegebene Zeitreferenz wiederholt erzeugt, indem sie den Paarzustand in einen zweiten Zustand versetzt.

4. Speicher-Teilsystem nach Anspruch 3, wobei das erste Speicher-Teilsystem (1A) aufweist:
ein logisches Volumen eines ersten Typs, das in einer physikalischen Speichereinrichtung vorgesehen ist, für die keine spezifischen Attribute gesetzt sind, und
mehrere logische Volumina eines zweiten Typs, die in einer physikalischen Speichereinrichtung vorgesehen sind, für die spezifische Attribute gesetzt sind,
wobei
das erste logische Volumen (21A) und das zweite logische Volumen (31A) das logische Volumen des ersten Typs bilden,
das dritte logische Volumen (21 B) ein virtuelles logisches Volumen bildet, das aus mindestens einem der logischen Volumina des zweiten Typs konfiguriert ist, und
die lokale Kopiereinrichtung **dadurch**, dass sie die Schreibzieldaten in eines der Vielzahl von logischen Volumina des zweiten Typs, das freien Raum aufweist, einschreibt, die Schreibzieldaten in das virtuelle logische Volumen (22) einschreibt.

5. Speicher-Teilsystem nach Anspruch 1, wobei
das erste Speicher-Teilsystem (1A) einen Cache-Speicher (107) zur vorübergehenden Speicherung der zwischen dem Host-Gerät (3) und dem ersten logischen Volumen (21 A) ausgetauschten Schreibzieldaten aufweist und
das logische Voraktualisierungsvolumen (21 B) in dem Cache-Speicher (107) vorgesehen ist.

6. Speicher-Teilsystem nach Anspruch 1, wobei das logische Voraktualisierungsvolumen (21 B) in dem ersten logischen Volumen (21A) vorgesehen ist.

7. Speicher-Teilsystem nach Anspruch 1, wobei
das erste Speicher-Teilsystem (1A) einen Cache-Speicher (107) zur vorübergehenden Speicherung der zwischen dem Host-Gerät und dem ersten logischen Volumen (21A) ausgetauschten Schreibzieldaten aufweist und
sämtliche oder ein Teil der Snapshot-Venrvaltungsinformationen (251) in dem Cache-Speicher (107) und/oder dem ersten logischen Volumen (21A) gespeichert sind.

8. Speicher-Teilsystem nach Anspruch 1, wobei das erste Speicher-Teilsystem (1A) aufweist:
einen Cache-Speicher (107) zur vorübergehenden Speicherung der zwischen einem Host-Gerät (3) zum Senden von Schreibanforderungen und Schreibzieldaten und dem ersten logischen Volumen (21A) ausgetauschten Schreibzieldaten,
mindestens einen Computer (101) und
einen Programmspeicherbereich (102), in dem ein oder mehrere Computerprogramme gespeichert sind, um durch Auslesen mittels des mindestens einen Computers diesen zu aktivieren, wobei
das logische Voraktualisierungsvolumen (21 B) in dem Cache-Speicher (107) vorgesehen ist und
der mindestens eine Computer, der das eine oder die mehreren Computerprogramme ausliest, so ausgelegt ist, dass er
(1) Schreibanforderungen und Schreibzieldaten von dem Host-Gerät (3) empfängt,
(2) die empfangenen Schreibzieldaten entsprechend den empfangenen Schreibanforderungen in das erste logische Volumen (21 A) schreibt,
(3) ab der gegebenen Zeitreferenz zusätzlich zu der Verarbeitung nach (2) die folgenden Schritte (4) bis (7) wiederholt, sooft die Verarbeitung nach (1) erfolgt,
(4) die voraktualisierten Daten in den Cache-Speicher (107) schreibt,
(5) die Snapshot-Verwaltungsinformationen (251) zu Informationen aktualisiert, die das Snapshot zu der gegebenen Zeitreferenz entsprechend der Aktualisierung des ersten logischen Volumens (21A) durch Einschreiben der Schreibzieldaten in das erste logische Volumen ausdrücken,
(6) zu einem nach der gegebenen Zeitreferenz gelegenen Zeitpunkt aufgrund der zu diesem späteren Zeitpunkt aktualisierten Snapshot-Verwaltungsinformationen (251) beurteilt, ob die die Datengruppe zu der gegebenen Zeitreferenz bildenden Daten in dem Cache-Speicher (107) oder dem ersten logischen Volumen (21A) vorliegen, sowie durch Erfassen und Senden der Daten von demjenigen Volumen, in dem sie vorliegen, an das zweite Speicher-Teilsystem (1 B) die Datengruppe zu dem gewissen Zeitpunkt in dem zweiten logischen Volumen (31 A) aufbaut, und
(7) die gegebene Zeitreferenz wiederholt erzeugt.

9. Speicher-Teilsystem nach Anspruch 8, wobei mindestens ein Computer (101) so ausgelegt ist, dass er sämtliche voraktualisierten Daten aus dem Cache-Speicher (107) löscht, wenn die gegebene Zeitreferenz erneut auftritt.

10. Speicher-Teilsystem nach Anspruch 9, wobei die Zeitpunkt-Generiereinrichtung regelmäßig oder unregelmäßig Ereignisse zur Erzeugung der gegebenen Zeitreferenz ausführt.

11. Speicher-Teilsystem eines Speichersystems, das ein erstes Speicher-Teilsystem (1A) mit einem ersten logischen Volumen (21A), dem mindestens ein erstes Plattenlaufwerk (20) zugeordnet ist, und ein zweites Speicher-Teilsystem (1 B) mit einem zweiten logischen Volumen (31A) aufweist,
wobei das erste Speicher-Teilsystem (1A) mit einem Host-Gerät (3) zum Senden von Schreibzieldaten und mit dem zweiten Speicher-Teilsystem (1 B) in Übertragungsverbindung steht und aufweist:
eine Einrichtung zum Einschreiben von Schreibzieldaten von dem Host-Gerät (3) in mindestens ein dem ersten logischen Volumen (21A) zugeordnetes Plattenlaufwerk,
einen Snapshot-Speicherbereich zur Speicherung von Snapshot-Verwaltungsinformationen (251), die ein Snapshot einer Datengruppe innerhalb des ersten logischen Volumens (21 A) ausdrücken,
ein logisches Voraktualisierungsvolumen (21 B), dem mindestens ein Plattenlaufwerk zur Speicherung von Daten zugeordnet ist, die Daten vor der Aktualisierung durch die Schreibzieldaten sowie Daten, die in das erste logische Volumen (21 A) eingeschrieben worden sind, bilden, und
eine Snapshot-Aktualisiereinrichtung, die über eine gegebene Zeitreferenz hinaus und wenn Schreibzieldaten in das erste logische Volumen (21A) eingeschrieben worden sind, die Snapshot-Verwaltungsinformationen (251) zu Informationen aktualisiert, die das Snapshot zu der gegebenen Zeitreferenz ausdrücken,
**dadurch gekennzeichnet, dass** das erste Speicher-Teilsystem ferner aufweist:
eine Voraktualisierungsdaten-Schreibeinrichtung (131), die nach der gegebenen Zeitreferenz und wenn Schreibzieldaten in das erste logische Volumen (21A) eingeschrieben worden sind, die voraktualisierten Daten in mindestens ein dem logischen Voraktualisierungsvolumen (21 B) zugeordnetes Plattenlaufwerk einschreibt, wobei das logische Voraktualisierungsvolumen keine Datenteile in das erste logische Volumen (21A) einspeichert, die nach der gegebenen Zeitreferenz nicht aktualisiert worden sind,
eine Fernkopiereinrichtung (133), die zu einem nach der gegebenen Zeitreferenz gelegenen Zeitpunkt aufgrund der zu diesem späteren Zeitpunkt aktualisierten Snapshot-Verwaltungsinformationen (251) beurteilt, ob die die Datengruppe zu der gegebenen Zeitreferenz bildenden Daten in dem logischen Voraktualisierungsvolumen (21 B) oder dem ersten logischen Volumen (21A) vorliegen, und durch Erfassen und Senden der Daten von dem betreffenden Volumen, in dem die Daten vorliegen, an das zweite Speicher-Teilsystem (1B), und
eine Zeitpunkt-Generiereinrichtung zur wiederholten Erzeugung der gegebenen Zeitreferenz, und
dass das zweite Speicher-Teilsystem (1 B) eine Einrichtung aufweist, um durch Einschreiben von von dem ersten Speicher-Teilsystem (1A) empfangenen Daten in das zweite logische Volumen (31A) die Datengruppe zu der gegebenen Zeitreferenz in dem zweiten logischen Volumen aufbaut.

12. Speicher-Teilsystem nach Anspruch 11, wobei das zweite Speicher-Teilsystem (1 B) aufweist:
einen getrennten Snapshot-Speicherbereich zur Speicherung getrennter Snapshot-Verwaltungsinformationen (252), die ein Snapshot einer Datengruppe innerhalb des zweiten logischen Volumens (31A) ausdrücken,
einen getrennten Voraktualisierungs-Speicherbereich zur Speicherung getrennter voraktualisierter Daten, die Daten vor der Aktualisierung durch die Daten aus dem ersten Speicher-Teilsystem sowie Daten, die in das zweite logische Volumen (31 B) einschrieben worden sind, bilden,
eine Voraktualisierungdaten-Schreibeinrichtung, die dann, wenn Daten aus dem ersten Speicher-Teilsystem in die zweite Speichereinrichtung geschrieben werden, die getrennten voraktualisierten Daten in den getrennten Voraktualisierungs-Speicherbereich einschreibt, und
eine getrennte Snapshot-Aktualisiereinrichtung, die dann, wenn die Daten aus dem ersten Speicher-Teilsystem in das zweite logische Volumen eingeschrieben werden, die Snapshot-Verwaltungsinformationen aktualisiert.

13. Speichersteuerverfahren, implementiert in einem Speichersystem, das ein erstes Speicher-Teilsystem (1A) mit einem ersten logischen Volumen (21A), dem mindestens ein erstes Plattenlaufwerk (20) zugeordnet ist, und ein zweites Speicher-Teilsystem (1 B) mit einem zweiten logischen Volumen (31A) aufweist,
wobei das erste Speicher-Teilsystem (1A) mit einem Host-Gerät (3) zum Senden von Schreibzieldaten und mit dem zweiten Speicher-Teilsystem (1 B) in Übertragungsverbindung steht und aufweist:
einen Snapshot-Speicherbereich zur Speicherung von Snapshot-Verwaltungsinformationen (251), die ein Snapshot einer Datengruppe innerhalb des ersten logischen Volumens (21A) ausdrücken, und
ein logisches Voraktualisierungsvolumen (21 B), dem mindestens ein Plattenlaufwerk zur Speicherung von Daten zugeordnet ist, die Daten vor der Aktualisierung durch die Schreibzieldaten sowie Daten, die in das erste logische Volumen (21 A) eingeschrieben worden sind, bilden,
wobei in dem Speichersteuerverfahren :
nach einer gegebenen Zeitreferenz von dem Host-Gerät (3) gesendete Schreibzieldaten in mindestens ein dem ersten logischen Volumen (21A) zugeordnetes Plattenlaufwerk geschrieben werden, und
nach der gegebenen Zeitreferenz und dann, wenn die Schreibzieldaten in das erste logische Volumen (21A) eingeschrieben werden, die Snapshot-Verwaltungsinformationen zu Informationen aktualisiert werden, die das Snapshot zu der gegebenen Zeitreferenz ausdrücken,
**dadurch gekennzeichnet, dass** in dem Verfahren ferner
nach der gegebenen Zeitreferenz und dann, wenn die Schreibzieldaten in das erste logische Volumen (21A) eingeschrieben werden, die voraktualisierten Daten der Schreibzieldaten in mindestens ein dem logischen Voraktualisierungsvolumen (21B) zugeordnetes Plattenlaufwerk geschrieben werden, wobei das logische Voraktualisierungsvolumen keine Datenteile in dem ersten logischen Volumen speichert, die nicht nach der gegebenen Zeitreferenz aktualisiert worden sind,
zu einem nach der gegebenen Zeitreferenz gelegenen Zeitpunkt aufgrund der zu diesem späteren Zeitpunkt aktualisierten Snapshot-Verwaltungsinformationen beurteilt wird, ob die die Datengruppen zu dem gewissen Zeitpunkt bildenden Daten in dem logischen Voraktualisierungsvolumen oder dem ersten logischen Volumen vorliegen, und durch Erfassen und Senden der Daten von demjenigen Volumen, in dem sie vorliegen, an das zweite Speicher-Teilsystem die Datengruppe zu dem gewissen Zeitpunkt in dem zweiten logischen Volumen aufgebaut werden, und
die gegebene Zeitreferenz wiederholt erzeugt wird.

## Revendications

1. Sous-système de mémorisation d'un système de mémorisation qui comporte un premier sous-système de mémorisation (1A) comportant un premier volume logique (21A) auquel est associée au moins une unité de disque (20) et un second sous-système de mémorisation (1B) comportant un deuxième volume logique (31A),
dans lequel le premier sous-système de mémorisation est connecté par voie de communication à un dispositif hôte (3) pour envoyer des données cibles d'écriture et audit second sous-système de mémorisation, et comporte :
des moyens pour écrire des données cibles d'écriture provenant dudit dispositif hôte dans au moins une unité de disque associée audit premier volume logique (21A),
une région de mémoire d'instantané pour la mémoire d'informations de gestion d'instantané (251) qui exprime un instantané d'un groupe de données dans ledit premier volume logique (21A),
un volume logique de pré-mise à jour (21B) auquel est associée au moins une unité de disque pour mémoriser des données qui constituent des données avant mise à jour par les données cibles d'écriture et constituent des données qui ont été écrites dans ledit premier volume logique (21A), et
des moyens de mise à jour d'instantané pour, au-delà d'une référence de temps donnée et lorsque des données cibles d'écriture ont été écrites dans ledit premier volume logique (21A), mettre à jour lesdites informations de gestion d'instantané (251) en informations qui expriment ledit instantané à ladite référence de temps donnée,
**caractérisé en ce que** le premier sous-système de mémorisation (1A) comporte de plus :
des moyens d'écriture de données pré-mises à jour (131) pour, au-delà de ladite référence de temps donnée et lorsque des données cibles d'écriture sont écrites dans ledit premier volume logique, écrire lesdites données pré-mises à jour dans au moins une unité de disque qui est associée au volume logique de pré-mise à jour (21B), le volume logique de pré-mise à jour ne mémorisant pas d'éléments de données dans le premier volume logique (21A) qui n'ont pas été mis à jour après ladite référence de temps donnée,
des moyens de copie à distance (133) pour, à un instant après ladite référence de temps donnée, déterminer, sur la base des informations de gestion d'instantané (251) mises à jour audit instant ultérieur, dans lequel parmi ledit volume logique de pré-mise à jour (21B) ou ledit premier volume logique (21A) se trouvent les données constituant ledit groupe de données à ladite référence de temps donnée et, par l'acquisition et l'envoi des données à partir du volume dans lequel se trouvent les données vers ledit second sous-système de mémorisation (1B), constituer ledit groupe de données à ladite référence de temps donnée dans ledit deuxième volume logique (31A), et
des moyens de génération de temps pour générer de manière répétée ladite référence de temps donnée.

2. Sous-système de mémorisation selon la revendication 1, comportant de plus des moyens pour, lorsque ladite référence de temps donnée a été générée à nouveau, supprimer toutes les données pré-mises à jour mémorisées dans ledit volume logique de pré-mise à jour (21B).

3. Sous-système de mémorisation selon la revendication 1, dans lequel ledit volume logique de pré-mise à jour (21B) est un troisième volume logique qui peut être configuré sous forme d'une paire avec ledit premier volume logique (21A),
ledit premier sous-système de mémorisation (1A) comporte des moyens de copie locale (131) pour, dans un cas où l'état de la paire dudit premier volume logique et dudit troisième volume logique est un premier état, écrire les données cibles d'écriture dans non seulement ledit premier volume logique mais également ledit troisième volume logique, et
lesdits moyens de génération de temps génèrent de manière répétée ladite référence de temps donnée en plaçant ledit état de la paire dans un second état.

4. Sous-système de mémorisation selon la revendication 3, dans lequel ledit premier sous-système de mémorisation (1A) comporte :
un volume logique de premier type, prévu dans un dispositif de mémoire physique, pour lequel aucun attribut spécifique n'est établi,
une pluralité de volumes logiques de second type, prévus dans un dispositif de mémoire physique, pour lesquels des attributs spécifiques sont établis, et
ledit premier volume logique (21A) et ledit deuxième volume logique (31A) constituent ledit volume logique de premier type,
ledit troisième volume logique (21B) constitue un volume logique virtuel configuré à partir d'au moins l'un des volumes logiques de second type,
et lesdits moyens de copie locale, en écrivant lesdites données cibles d'écriture dans un volume logique de second type de ladite pluralité de volumes logiques de second type qui a un espace libre, écrivent lesdites données cibles d'écriture dans ledit volume logique virtuel (22).

5. Sous-système de mémorisation selon la revendication 1, dans lequel ledit premier sous-système de mémorisation (1A) comporte une mémoire cache (107) pour la mémoire temporaire desdites données cibles d'écriture échangées entre ledit dispositif hôte (3) et ledit premier volume logique (21A), et
ledit volume logique de pré-mise à jour (21B) est prévu dans ladite mémoire cache (107).

6. Sous-système de mémorisation selon la revendication 1, dans lequel ledit volume logique de pré-mise à jour (21B) est prévu dans le premier volume logique (21A).

7. Sous-système de mémorisation selon la revendication 1, dans lequel ledit premier sous-système de mémorisation (1A) comporte une mémoire cache (107) pour la mémoire temporaire desdites données cibles d'écriture échangées entre ledit dispositif hôte et ledit premier volume logique (21A), et la totalité ou une partie desdites informations de gestion d'instantané (251) est mémorisée dans au moins l'un parmi ladite mémoire cache (107) et ledit premier volume logique (21A).

8. Sous-système de mémorisation selon la revendication 1, dans lequel ledit premier sous-système de mémorisation (1A) comporte :
une mémoire cache (107) pour la mémoire temporaire desdites données cibles d'écriture échangées entre un dispositif hôte (3) pour envoyer des demandes d'écriture et des données cibles d'écriture et ledit premier volume logique (21A),
au moins un ordinateur (101),
et une région de mémoire de programme (102)
dans laquelle un ou plusieurs programmes informatiques sont mémorisés pour, en étant lus par ledit au moins un ordinateur, faire fonctionner ledit au moins un ordinateur,
ledit volume logique de pré-mise à jour (21B) est prévu sur ladite mémoire cache (107), et
ledit au moins un ordinateur qui lit lesdits un ou plusieurs programmes informatiques est conçu pour:
(1) recevoir des demandes d'écriture et des données cibles d'écriture depuis ledit dispositif hôte (3),
(2) écrire lesdites données cibles d'écriture reçues dans ledit premier volume logique (21A) conformément auxdites demandes d'écriture reçues,
(3) à partir de ladite référence de temps donnée désormais, en plus du traitement de ladite étape (2), à chaque fois que ledit traitement de l'étape (1) est mis en oeuvre, répéter les étapes (4) à (7) ci-dessous,
(4) écrire lesdites données pré-mises à jour dans ladite mémoire cache (107),
(5) mettre à jour lesdites informations de gestion d'instantané (251) en informations qui expriment ledit instantané à ladite référence de temps donnée conformément à la mise à jour dudit premier volume logique (21A) par l'écriture desdites données cibles d'écriture dans ledit premier volume logique,
(6) à un instant après ladite référence de temps donnée, déterminer, sur la base des informations de gestion d'instantané (251) mises à jour audit moment ultérieur, dans lequel parmi ladite mémoire cache (107) ou ledit premier volume logique (21A) se trouvent les données constituant ledit groupe de données à ladite référence de temps donnée et, par l'acquisition et l'envoi des données par celui dans lequel se trouvent les données audit second sous-système de mémorisation (1B), constituer ledit groupe de données audit instant particulier dans ledit deuxième volume logique (31A), et
(7) générer de manière répétée ladite référence de temps donnée.

9. Sous-système de mémorisation selon la revendication 8,
dans lequel ledit au moins un ordinateur (101) est conçu pour supprimer toutes les données pré-mises à jour de ladite mémoire cache (107) lorsque ladite référence de temps donnée apparaît à nouveau.

10. Sous-système de mémorisation selon la revendication 9,
dans lequel lesdits moyens de génération de temps exécutent de manière régulière ou irrégulière des événements pour la génération de la référence de temps donnée.

11. Sous-système de mémorisation d'un système de mémorisation comportant un premier sous-système de mémorisation (1A) comportant un premier volume logique (21A) auquel est associée au moins une unité de disque (20) et un second sous-système de mémorisation (1B) comportant un deuxième volume logique (21B),
dans lequel ledit premier volume logique (21A) est connecté par voie de communication à un dispositif hôte (3) pour envoyer des données cibles d'écriture et audit second sous-système de mémorisation (1B), et comporte :
des moyens pour écrire des données cibles d'écriture provenant dudit dispositif hôte (3) dans au moins une unité de disque associée audit premier volume logique (21A),
une région de mémoire d'instantané pour la mémoire d'informations de gestion d'instantané (251) qui expriment un instantané d'un groupe de données dans ledit premier volume logique (21A),
un volume logique de pré-mise à jour (21B) auquel est associée au moins une unité de disque pour mémoriser des données qui constituent des données avant mise à jour par les données cibles d'écriture et constituent des données qui ont été écrites dans ledit premier volume logique (21A), et
des moyens de mise à jour d'instantané pour, au-delà d'une référence de temps donnée lorsque les données cibles d'écriture sont écrites dans ledit premier volume logique (21A), mettre à jour lesdites informations de gestion d'instantané (251) en informations qui expriment ledit instantané à ladite référence de temps donnée, **caractérisé en ce que** le premier sous-système de mémorisation (1A) comporte de plus :
des moyens d'écriture de données pré-mises à jour (131) pour, au-delà de ladite référence de temps donnée lorsque des données cibles d'écriture sont écrites dans ledit premier volume logique (21A), écrire lesdites données pré-mises à jour dans au moins une unité de disque qui est associée audit volume logique de pré-mise à jour (21B), le volume logique de pré-mise à jour ne mémorisant pas d'éléments de données dans le premier volume logique (21A) qui n'ont pas été mis à jour après ladite référence de temps donnée,
des moyens de copie à distance (133) pour, à un instant ultérieur à ladite référence de temps donnée, déterminer, d'après les informations de gestion d'instantané (251) mises à jour audit instant ultérieur, dans lequel parmi ledit volume logique de pré-mise à jour (21B) ou ledit premier volume logique (21A) se trouvent les données constituant ledit groupe de données à ladite référence de temps donnée et, acquérir et envoyer les données à partir de celui dans lequel se trouvent des données audit second sous-système de mémorisation (1B), et
des moyens de génération de temps pour générer de manière répétée ladite référence de temps donnée, et **en ce que**
ledit second sous-système de mémorisation (1B) comporte des moyens pour, par l'écriture de données reçues depuis ledit premier sous-système de mémorisation (1A) dans ledit deuxième volume logique (31A), constituer ledit groupe de données à ladite référence de temps donnée dans ledit deuxième volume logique.

12. Sous-système de mémorisation selon la revendication 11, dans lequel ledit second sous-système de mémorisation (1B) comporte :
une région de mémoire d'instantané séparée pour la mémoire d'informations de gestion d'instantané séparées (252) qui expriment un instantané d'un groupe de données dans ledit deuxième volume logique (31A),
une région de mémoire pré-mise à jour séparée pour la mémoire de données pré-mises à jour séparées qui constituent des données avant la mise à jour par les données dudit premier sous-système de mémorisation et constituent des données qui ont été écrites dans ledit deuxième volume logique (31B),
des moyens d'écriture de données pré-mises à jour pour, lorsque des données dudit premier sous-système de mémorisation sont écrites dans ledit deuxième dispositif de mémoire, écrire lesdites données pré-mises à jour séparées dans ladite région de mémoire pré-mise à jour séparée, et
des moyens de mise à jour d'instantané séparés pour, lorsque les données dudit premier sous-système de mémorisation sont écrites dans ledit deuxième volume logique, mettre à jour lesdites informations de gestion d'instantané.

13. Procédé de commande de mémorisation mis en oeuvre dans un système de mémorisation qui comporte un premier sous-système de mémorisation (1A) comportant un premier volume logique (21A) auquel est associée au moins une unité de disque (20) et un second sous-système de mémorisation (1B) comportant un deuxième volume logique (31A),
dans lequel, ledit premier sous-système de mémorisation (1A) est connecté par voie de communication à un dispositif hôte (3) pour envoyer des données cibles d'écriture, et audit second sous-système de mémorisation (1B), et ledit premier sous-système de mémorisation (1A) comporte :
une région de mémoire d'instantané pour la mémoire d'informations de gestion d'instantané (251) qui expriment un instantané d'un groupe de données dans ledit premier volume logique (21A), et
un volume logique de pré-mise à jour (21B) auquel est associé au moins un dispositif de disque pour mémoriser des données qui constituent des données avant mise à jour par les données cibles d'écriture et constituent des données qui ont été écrites dans ledit premier volume logique (21A),
le procédé de commande de mémorisation comporte les étapes consistant à :
au-delà d'une référence de temps donnée, écrire des données cibles d'écriture envoyées par ledit dispositif hôte (3) dans au moins une unité de disque associée audit premier volume logique (21A),
au-delà de ladite référence de temps donnée et lorsque les données cibles d'écriture sont écrites dans ledit premier volume logique (21A), mettre à jour les informations de gestion d'instantané (251) en informations qui expriment ledit instantané à ladite référence de temps donnée, **caractérisé en ce que** le procédé comporte les étapes supplémentaires consistant à :
au-delà de ladite référence de temps donnée et lorsque les données cibles d'écriture sont écrites dans ledit premier volume logique (21A), écrire lesdites données pré-mises à jour desdites données cibles d'écriture dans au moins une unité de disque associée audit volume logique de pré-mise à jour (21B), le volume logique de pré-mise à jour ne mémorisant pas d'éléments de données dans le premier volume logique qui n'ont pas été mis à jour après ladite référence de temps donnée,
à un instant ultérieur à ladite référence de temps donnée, déterminer, sur la base des informations de gestion d'instantané mises à jour audit instant ultérieur, dans lequel parmi ledit volume logique de pré-mise à jour ou ledit premier volume logique se trouvent les données constituant ledit groupe de données audit instant particulier et, par l'acquisition et l'envoi des données par celui dans lequel se trouvent les données audit second sous-système de mémorisation, constituer ledit groupe de données audit instant particulier dans ledit deuxième volume logique, et
générer de manière répétée ladite référence de temps donnée.
